(19) Europäisches Patentamt

European Patent Office

Office européen des brevets

(11) **EP 0 738 036 B1**

(12) **FASCICULE DE BREVET EUROPEEN**

(45) Date de publication et mention
de la délivrance du brevet:
**11.08.2004 Bulletin 2004/33**

(51) Int Cl.⁷: **H02P 7/638**

(21) Numéro de dépôt: **96410033.3**

(22) Date de dépôt: **09.04.1996**

(54) **Procédé de régulation de vitesse d'un moteur électrique**

Geschwindigkeitsregelungsverfahren für einen elektrischen Motor

Speed control process for an electric motor

(84) Etats contractants désignés:
**DE ES FR IT**

(30) Priorité: **14.04.1995 FR 9504759**

(43) Date de publication de la demande:
**16.10.1996 Bulletin 1996/42**

(73) Titulaire: **CROUZET APPLIANCE CONTROLS
F-26120 Montelier Chabeuil (FR)**

(72) Inventeurs:
• **Astic, Georges
26320 Saint Marcel les Valence (FR)**
• **Girardin, Denis
26300 Alixan (FR)**

(74) Mandataire: **de Beaumont, Michel
1bis, rue Champollion
38000 Grenoble (FR)**

(56) Documents cités:
**EP-A- 0 564 378**

• **REVUE GENERALE DE L'ELECTRICITE, no. 1,
PARIS FR, pages 24-27, XP000423958 T.
CASTAGNET: "Commande economique de
moteur par un microcontroleur"**
• **ELEKTRONIK, vol. 35, no. 14, MUNCHEN DE,
pages 73-78, XP000573277 H. SAX ET AL:
"Mikrocomputer mit Sensor- und
Aktuator-Interface"**

**Description**

La présente invention concerne la régulation de la vitesse d'un moteur électrique, notamment d'un moteur de type universel.

Les moteurs de type universel équipent de plus en plus d'appareils fabriqués en grande série, tels que les machines à laver, car ils permettent, à l'aide d'une commande électronique simple, d'obtenir une grande plage de vitesses de rotation allant, dans l'exemple des machines à laver, de la vitesse basse de lavage à la vitesse élevée d'essorage.

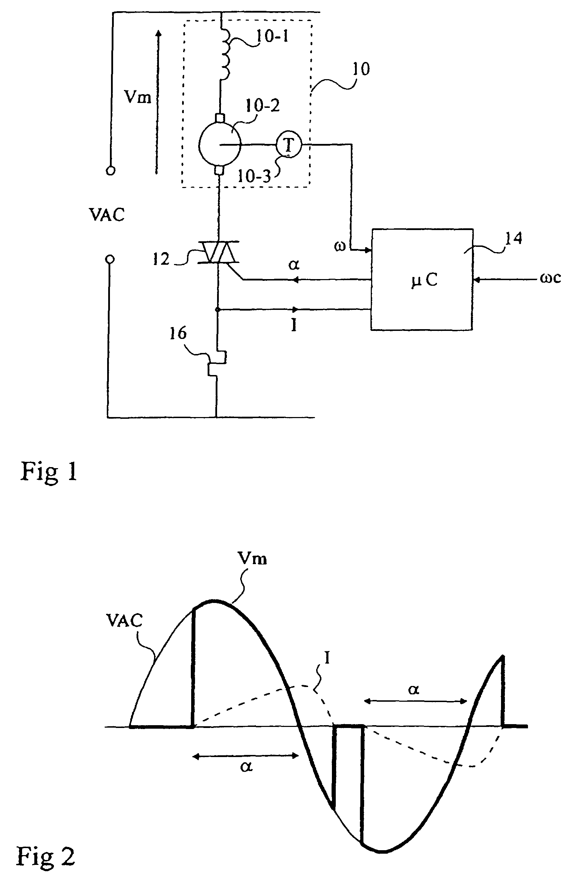

La figure 1 représente un circuit classique de régulation de vitesse d'un moteur de type universel. Le moteur universel 10 comprend un bobinage de stator 10-1 connecté en série avec un bobinage de rotor 10-2. Pour pouvoir réguler la vitesse du moteur, on utilise classiquement un moteur qui est équipé d'un tachymètre 10-3, comme cela est décrit dans la demande de brevet EP-A-0564378 et l'article de H. SAX paru dans "ELEKTRONIK", vol. 35, N° 14, pages 73-78.

Le moteur 10 est alimenté, généralement à partir de la tension du secteur VAC, par l'intermédiaire d'un triac 12. Un microcontrôleur 14 reçoit l'information de vitesse $\omega$ du tachymètre 10-3 et une vitesse de consigne $\omega c$. En fonction de la différence entre la vitesse mesurée $\omega$ et la vitesse de consigne $\omega c$, le microcontrôleur corrige l'angle de conduction $\alpha$ du triac 12 pour faire tendre $\omega$ vers $\omega c$.

En outre, le microcontrôleur 14 surveille le courant I du moteur, mesuré aux bornes d'un shunt 16 relié en série avec le triac 12. Cette surveillance du courant est nécessaire pour éviter de détruire le moteur lorsque son couple résistant est trop important, ou bien lorsque le tachymètre 10-3 tombe en panne.

La figure 2 représente les allures de la tension Vm aux bornes du moteur 10 et du courant I le traversant lors d'une phase de fonctionnement normal. A chaque alternance du secteur VAC, le triac 12 est mis en conduction pendant un intervalle de temps commençant après le début de l'alternance et se terminant lorsque le courant I dans le triac s'annule de lui-même à un instant qui dépend du déphasage courant/tension dans le circuit. On appelle angle de conduction $\alpha$ la durée qu'aurait cette conduction si le déphasage courant/tension était nul.

Cette commande de moteur, à l'aide d'un triac à angle de conduction variable, présente l'avantage d'être simple et économique. Toutefois, elle génère des parasites sur le secteur.

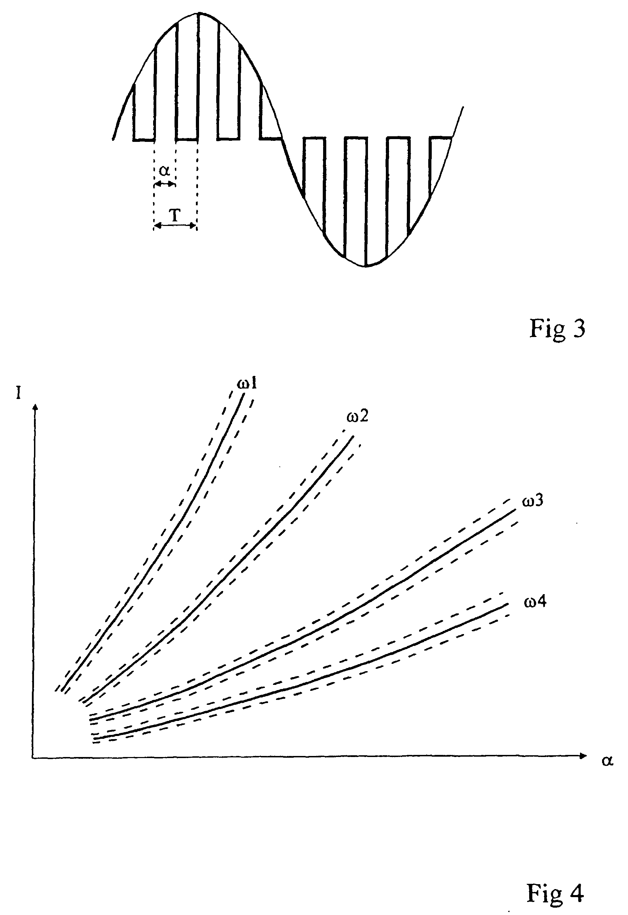

La figure 3 illustre une commande de moteur qui génère moins de parasites. Ici, la tension fournie au moteur est hachée à une fréquence constante élevée 1/T et on fait varier le rapport cyclique de ce hachage. Les intervalles de temps pendant lesquels le moteur 10 est alimenté, également notés $\alpha$, sont équivalents à l'angle de conduction $\alpha$ de la figure 2.

Dans les fabrications de grande série, comme dans le cas des machines à laver, on cherche à tout prix à diminuer le coût sans toutefois dégrader la qualité de manière perceptible.

Un objet de la présente invention est de prévoir une régulation de vitesse pouvant être mise en oeuvre à l'aide d'un circuit particulièrement peu coûteux.

Pour atteindre cet objet, la présente invention prévoit une régulation de vitesse d'un moteur, notamment d'un moteur de type universel, ne nécessitant pas de tachymètre. Pour cela, il est prévu un procédé de régulation de vitesse d'un moteur électrique par variation du temps d'alimentation du moteur, comprenant les étapes consistant à stocker préalablement, pour une vitesse constante à obtenir, la courbe du courant du moteur en fonction du temps d'alimentation ; à établir un temps d'alimentation ; à mesurer le courant résultant du moteur ; et à corriger le temps d'alimentation de manière à faire tendre vers la courbe le point défini par le temps d'alimentation et le courant mesuré résultant.

Selon un mode de réalisation de la présente invention, une correction appliquée au temps d'alimentation est supérieure à l'écart, à courant constant, entre la courbe et ledit point.

Selon un mode de réalisation de la présente invention, le courant mesuré est corrigé en fonction de la tension d'alimentation du moteur avant d'être comparé à la courbe.

Selon un mode de réalisation de la présente invention, différentes courbes correspondant à différentes tensions d'alimentation sont stockées pour la vitesse à obtenir, l'une de ces courbes étant sélectionnée en fonction d'une valeur mesurée de la tension d'alimentation.

Ces objets, caractéristiques et avantages ainsi que d'autres de la présente invention seront exposés en détail dans la description suivante de modes de réalisation particuliers, faite à titre non-limitatif à l'aide des figures jointes parmi lesquelles :

la figure 1, précédemment décrite, représente un circuit classique de régulation de vitesse d'un moteur de type universel ;

les figures 2 et 3 illustrent deux modes de commande classiques de moteur ;

la figure 4 représente une famille de courbes établie selon la présente invention pour réaliser une régulation de vitesse ;

la figure 5 illustre un exemple d'utilisation de l'une des courbes de la figure 4 pour obtenir une régulation de vitesse selon l'invention ; et

la figure 6 représente un mode de réalisation de circuit de régulation permettant de mettre en oeuvre le procédé selon l'invention.

Pour réduire le coût d'un système de régulation de vitesse d'un moteur, notamment d'un moteur universel, la présente invention vise à supprimer un capteur de vitesse classiquement utilisé, comme par exemple le tachymètre 10-3 de la figure 1, tout en assurant une régulation de vitesse de qualité convenable.

Il existe des systèmes de régulation de vitesse sans capteur qui exploitent la force contre-électromotrice du moteur, qui est directement indicative de la vitesse. Ainsi, l'article de T. CASTAGNET : "Commande économique de moteur par un microcontrôleur" de la REVUE GENERALE D'ELECTRICITE, N° 1, PARIS (FR), pages 24-27, décrit un contrôle de vitesse sans capteur qui exploite la force contre-électromotrice du moteur pour calculer la vitesse actuelle du moteur afin de la comparer à une valeur de consigne. Alors que la force contre-électromotrice peut être mesurée dans des moteurs à rotor aimanté (tels que les moteurs synchrones ou série à aimant permanent), elle ne peut par contre pas être mesurée dans des moteurs universels qui n'ont aucun élément aimanté.

Selon l'invention, on part de l'hypothèse que le courant I circulant dans le moteur s'exprime par :

$$I = f\,(\alpha,\,\omega,\,V),$$

où f est une fonction inconnue, $\alpha$ la durée d'alimentation du moteur (sensiblement l'angle de conduction dans le cas de la figure 1), $\omega$ la vitesse de rotation du moteur, et V la tension appliquée sur le moteur. Les variables I et V peuvent être des valeurs crête, moyennes, ou autre. On utilise de préférence les valeurs crête qui varient rapidement et sont plus faciles à mesurer.

Le procédé de régulation selon l'invention comprend une étape préliminaire qui consiste à tracer, pour chaque vitesse à laquelle on veut pouvoir réguler le moteur, le courant I en fonction du temps d'alimentation $\alpha$, en supposant que la tension d'alimentation V est constante et égale à sa valeur nominale.

Ces courbes sont obtenues de manière expérimentale en faisant varier $\alpha$ et en mesurant le courant I pour chaque valeur de $\alpha$, tandis que la vitesse du moteur est maintenue constante à la valeur souhaitée à l'aide d'un frein.

La figure 4 représente une famille de quatre courbes schématiques $\omega 1$ à $\omega 4$ obtenues ainsi, ces courbes correspondant à des vitesses croissantes. Plus la vitesse est grande, plus le courant I est faible.

Bien entendu, chaque type de moteur peut avoir une famille de courbes différente. Toutefois, dans les cas de fabrication en grande série, notamment pour les machines à laver, les moteurs ont une qualité constante et la famille de courbes varie de manière peu significative d'un moteur à l'autre.

Une fois que la famille de courbes a été relevée de manière expérimentale, on mémorise les courbes, par exemple dans la mémoire ROM d'un microcontrôleur. Pour cela, par exemple, on établit une succession de valeurs de $\alpha$ que l'on se propose d'utiliser dans le procédé, et pour chacune de ces valeurs de $\alpha$, on mémorise les valeurs correspondantes du courant I des courbes de la famille.

Dans un procédé de régulation de vitesse selon l'invention, décrit en détail ci-dessous, la consigne de vitesse sert à sélectionner une courbe de la famille, la variable de commande est le temps d'alimentation $\alpha$, et la variable de contre-réaction est la mesure du courant I du moteur.

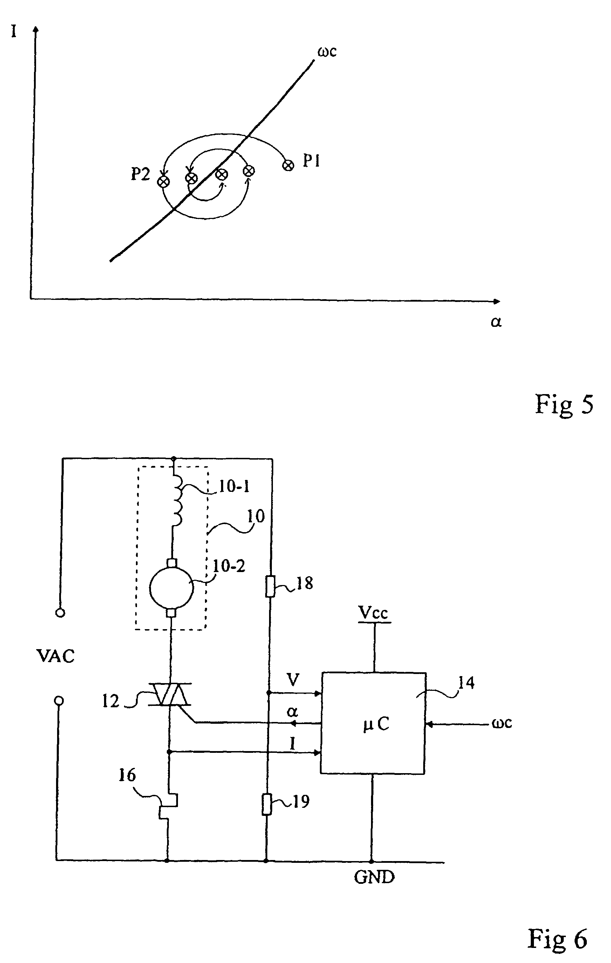

La figure 5 est destinée à illustrer le procédé selon l'invention pour réguler la vitesse du moteur à une valeur $\omega c$. La valeur $\omega c$ est fournie en tant que consigne de vitesse, par exemple à un microcontrôleur, et sélectionne une courbe correspondante $\omega c$ de la famille mémorisée. On commence par imposer une valeur de $\alpha$ initiale, cette valeur pouvant être arbitraire ou une estimation. Le courant I alors mesuré, associé à l'angle $\alpha$ qui l'a engendré, fournit un point P1 qui est par exemple situé en dessous de la courbe de consigne $\omega c$, soit à une vitesse supérieure à la consigne. Par analyse de l'écart, on détermine alors une réduction $\Delta\alpha$ de l'angle de conduction du triac afin de réduire la vitesse par réduction du courant I. Evidemment, la loi d'asservissement de $\alpha$ et de I pour rester sur la consigne de vitesse $\omega c$ peut être de différentes natures afin de converger plus ou moins rapidement sur la consigne. Dans l'exemple de la figure 5, la loi d'asservissement est de type itératif et provoque une oscillation de la vitesse réelle autour de la consigne $\omega c$. D'autres lois plus douces pourraient être retenues pour permettre une convergence par croissance ou décroissance régulière vers la valeur de consigne $\omega c$.

Bien entendu, le procédé selon l'invention exige que l'on utilise une courbe pour chaque vitesse à laquelle on veut pouvoir réguler le moteur. Dans de nombreux cas, comme dans les machines à laver, le nombre de vitesses est limité, et il n'y a pas d'inconvénient à mémoriser toutes les courbes. Dans d'autres cas, certaines courbes à utiliser pourront être interpolées entre deux courbes mémorisées. Dans d'autres cas, plusieurs points d'une même courbe pourront être interpolés. Dans encore d'autres cas, les courbes peuvent être modélisées mathématiquement.

Comme on l'a précédemment indiqué, la famille de courbes de vitesse constante est établie pour une tension d'alimentation V égale à sa valeur nominale. Toutefois cette tension, notamment si elle est la tension du secteur, est susceptible de varier dans certaines limites qui n'ont pas une influence négligeable sur la famille de courbes. On peut admettre que les courbes $\omega$ sont sensiblement modifiées par les variations de la tension d'alimentation. La mesure de la tension d'alimentation permettra donc d'adapter les courbes $\omega$ aux variations de la tension du secteur. La position de la courbe de consigne $\omega c$ sera donc corrigée, comme cela est indiqué en pointillés en figure 4, de façon à tenir compte de l'évolution de la tension secteur réelle. Cette courbe de consigne $\omega c$ s'infléchira vers l'axe horizontal en cas de diminution de la tension V du secteur, et inversement. Cette correction de la courbe $\omega c$ ne change en rien les lois d'asservissement décrites plus haut.

La figure 6 représente un mode de réalisation de circuit de régulation permettant de mettre en oeuvre le procédé qui vient d'être décrit. Des mêmes éléments qu'à la figure 1 sont désignés par des mêmes références. Ce circuit diffère du circuit classique de la figure 1 par le fait que le moteur 10 ne comporte pas de tachymètre connecté au microcontrôleur 14. Ce microcontrôleur 14 reçoit toujours une information de courant I prélevée aux bornes du shunt 16 et établit l'angle de conduction $\alpha$ du triac 12. La variable de contre-réaction n'est plus la mesure de la vitesse $\omega$ fournie par le tachymètre de la figure 1 mais le courant I du moteur. Le microcontrôleur 14 mémorise dans sa mémoire ROM la famille de courbes, l'une de ces courbes étant sélectionnée par la consigne de vitesse $\omega c$. En outre, le microcontrôleur 14 reçoit une indication V de la tension du secteur par un pont de résistances 18, 19 pour effectuer l'une des corrections susmentionnées afin de tenir compte des variations de la tension crête du secteur. Bien entendu, le programme du microcontrôleur met en oeuvre le procédé de régulation décrit en relation avec la figure 5.

Bien que l'invention a été décrite en relation avec un moteur de type universel commandé par triac, elle s'applique à tout type de moteur et à tout type de commande à temps d'alimentation variable. L'homme de l'art notera que la présente invention pourrait aussi être mise en oeuvre par un circuit électronique analogique.

**Revendications**

1. Procédé de régulation de vitesse d'un moteur électrique (10) par variation du temps d'alimentation ($\alpha$) du moteur, **caractérisé en ce qu'**il comprend les étapes suivantes :

    - stocker préalablement, pour une vitesse constante à obtenir ($\omega c$), la courbe du courant (I) du moteur en fonction du temps d'alimentation ;
    - établir un temps d'alimentation ;
    - mesurer le courant résultant du moteur ; et
    - corriger le temps d'alimentation de manière à faire tendre vers un point de la courbe le point ($\alpha$, I) défini par le temps d'alimentation et le courant mesuré résultant.

2. Procédé de régulation de vitesse selon la revendication 1, **caractérisé en ce que** ledit temps d'alimentation correspond à un angle de conduction.

3. Procédé de régulation de vitesse selon la revendication 1, **caractérisé en ce que** le temps d'alimentation est corrigé itérativement par échelons d'amplitude supérieure à l'écart, à courant constant, entre la courbe et ledit point.

4. Procédé de régulation de vitesse selon la revendication 1, **caractérisé en ce que** le courant mesuré (I) est corrigé en fonction de la tension d'alimentation (V) du moteur avant d'être comparé à la courbe.

5. Procédé de régulation de vitesse selon la revendication 1, **caractérisé en ce que** différentes courbes correspondant à différentes tensions d'alimentation sont stockées pour la vitesse à obtenir ($\omega c$), l'une de ces courbes étant sélectionnée en fonction d'une valeur mesurée de la tension d'alimentation (V).

**Patentansprüche**

1. Ein Verfahren zur Regelung der Drehzahl eines Elektromotors (10) durch Verändern der Versorgungsdauer ($\alpha$) des Motors, **dadurch gekennzeichnet, dass** die folgenden Schritte vorgesehen sind:

    - anfängliches Speichern, für konstante eine zu erhaltende Drehzahl ($\omega c$), der Kurve des Stromes (I) im Motor als eine Funktion der Versorgungsdauer;
    - Auswahl einer Versorgungsdauer;
    - Messen des sich ergebenden Stroms im Motor; und
    - Korrektur der Versorgungsdauer derart, dass der Punkt ($\alpha$, I) definiert durch die Versorgungsdauer und der sich ergebende gemessene Strom zu einem Punkt der Kurve konvergieren.

2. Das Verfahren nach Anspruch 1, **dadurch gekennzeichnet, dass** die Versorgungsdauer einem Leitungswinkel entspricht.

3. Das Verfahren nach Anspruch 1, **dadurch gekennzeichnet, dass** die Versorgungsdauer iterativ durch Stufen höherer Amplitude als die Differenz bei einem konstanten Strom zwischen der Kurve bzw. Stufe und dem erwähnten Punkt korrigiert wird.

4. Das Verfahren nach Anspruch 1, **dadurch gekennzeichnet, dass** der gemessene Strom (I) als eine Funktion der Motorversorgungsspannung (V) vor dem Vergleich mit der erwähnten Kurve korrigiert wird.

5. Das Verfahren nach Anspruch 1, **dadurch gekennzeichnet, dass** eine Vielzahl von Kurven entsprechend einer Vielzahl von Versorgungsspannungen für jede zu erhaltende Drehzahl ($\omega c$) gespeichert ist, wobei eine dieser Kunrven als eine Funktion eines Messwertes der Versorgungsspannung (V) ausgewählt wird.

**Claims**

1. A speed control method for controlling an electric motor (10) by varying the supply duration ($\alpha$) of the motor, **characterized in that** it comprises the following steps:

   - initially storing, for a constant speed to be obtained ($\omega c$), the curve of the current (I) in the motor as a function of the supply duration;
   - selecting a supply duration;
   - measuring the resulting current in the motor; and
   - correcting the supply duration so that the point ($\alpha$, I) defined by the supply duration and the resulting measured current converges towards a point of the curve.

2. The method of claim 1, **characterized in that** the supply duration corresponds to a conduction angle.

3. The method of claim 1, **characterized in that** the supply duration is iteratively corrected by steps of higher amplitude than the difference, at a constant current, between the curve and said point.

4. The method of claim 1, **characterized in that** the measured current (I) is corrected as a function of the motor supply voltage (V), before being compared with said curve.

5. The method of claim 1, **characterized in that** a plurality of curves corresponding to a plurality of supply voltages are stored for each speed to be obtained ($\omega c$), one of these curves being selected as a function of a measured value of the supply voltage (V).

Fig 1

Fig 2

Fig 3

Fig 4

Fig 5

Fig 6